# EUROPEAN PATENT SPECIFICATION

(11) **EP 4 280 099 B1**
(45) Date of publication and mention of the grant of the patent: **25.11.2026**
(21) Application number: 23193569.3
(22) Date of filing: 23.02.2015
(51) Int. Cl.: G06K 7/10

(54) **INDICIA READER FOR SIZE-LIMITED APPLICATIONS**
MARKIERUNGSLESEGERÄT FÜR GRÖSSENBEGRENZTE ANWENDUNGEN
LECTEUR D'INDICES POUR DES APPLICATIONS LIMITÉES EN TAILLE

(30) Priority: 07.03.2014 US 201414200405
(43) Date of publication of application: 22.11.2023
(62) Document number(s) of the earlier application(s) in accordance with Art. 76 EPC: 21150322.2 / 3 836 002; 15156203.0 / 2 916 259
(73) Proprietor: Hand Held Products, Inc., Fort Mill, SC 29707 (US)
(72) Inventor: FENG, Chen, Charlotte, 28202 (US); BREMER, Edward C., Charlotte, 28202 (US); XIAN, Tao, Charlotte, 28202 (US); KEARNEY, Sean Philip, Charlotte, 28202 (US); PATEL, Mehul, Charlotte, 28202 (US)
(74) Representative: Haseltine Lake Kempner LLP

(56) References cited:
- EP-A2- 2 482 226
- US-A1- 2003 089 776
- US-A1- 2014 001 267

## Description

### FIELD OF THE INVENTION

The present invention relates to the field of indicia readers, more specifically, to an imaging barcode reader module suitable for integration into a slim, hand-supportable, mobile device.

### BACKGROUND

Over the past forty years, businesses have sought to maximize efficiency by using various devices to automate data entry. In the important area of inventory management, in particular, the symbol reading device (*e*.*g*., barcode reader, barcode scanner or RFID reader) has greatly reduced the time and errors inherent to manual data entry. Symbol reading devices are often employed to decode barcodes. A barcode is a machine-readable representation of information in graphic format. Traditionally, a barcode is a series of parallel bars and spaces of varying widths (*e*.*g*., a linear barcode or 1D barcode). More recently, there has been an increase in the use of alternatives to the linear barcode, for example matrix codes (*e.g*., 2D barcodes, QR Code, Aztec Code, and Data Matrix) and Optical Character Recognition (OCR) have enjoyed increasing popularity as the technology advances. As used herein, the terms barcode, indicia, and code-symbol are intended in their broadest sense to include linear barcodes, matrix barcodes, and OCR-enabled labels.

Indicia readers (*e.g*., barcode readers) tend to fall into one of three categories: wand readers, laser scan engine barcode readers, and image sensor based barcode readers. Wand readers generally include a single light source and single photodetector housed in a pen shaped housing. A user drags the wand reader across a code symbol (*e*.*g*., a barcode) and a signal is generated representative of the bar space pattern of the barcode. Laser scan engine-based barcode readers typically include a laser diode assembly generating a laser light beam and a moving mirror for sweeping the laser light beam across a code symbol, wherein a signal is generated corresponding to the code symbol. Image-sensor-based barcode readers typically include multi-element image sensors such as CID, CMOS, or CCD image sensors and an imaging optic for focusing an image onto the image sensor. In the operation of an image-sensor-based barcode reader, an image of a code symbol is focused on an image sensor and a signal is generated corresponding to the code symbol. Image sensor elements may be arrayed in a line or in a rectangular matrix or area. Area image sensors capture a digital picture and use software algorithms to find and decode one or more symbols. Users of laser scanner engine-based barcode readers have been switching in increasing numbers to image sensor based barcode readers. Image sensor based barcode readers offer additional features and functions relative to laser scan engine based barcode readers. These features and functions result from image processing algorithms. The limits of which are typically based on the processing resources available from the device.

Virtually all thin-profile, hand-supportable, smart-devices (*e*.*g*., smart-phones) now have integrated cameras. Accordingly, numerous applications capable of utilizing the integrated camera for indicia reading have been developed for these devices. While these applications perform reasonably well for the casual user, they lack the features and functions present in dedicated devices. Illumination, aiming, stabilization, and focusing could all suffer when using a general purpose mobile imaging device for indicia reading. The lack of dedicated resources could slow performance and compromise efficiency in fast paced work environments.

Typical users want to carry only one device and will be reluctant to trade their smart-device for a scanner. A need, therefore, exists for an indicia-reading module with all of the features of a dedicated scanner device that can integrate with a smart-device without being bulky. Such a module could integrate internally or externally. If internal, the module would have dimensions allowing for seamless integration into the smart device and would be easy for the user to operate with one hand. To this end an indicia-reader module that integrates into the smallest area side of the smart device *(i.e.,* narrow-edge integration) would operate much like a hand-held, remote control which most users know well. This integration, however, puts severe limitations on the design of such a dedicated image-based optical scanner module. Unique design approaches and construction methods must be combined to allow for such novel integration.
EP2482226A2 discloses an indicia reading terminal having an illumination subsystem and an aimer subsystem. US2003/0089776A1 discloses an imaging module having an aiming system having an optical element and an illumination system having diffusers.

### SUMMARY

Aspects of the present invention are defined in the accompanying claims. Advantageous optional features are defined in the dependent claims. Accordingly, in one aspect, the present invention embraces a module for reading indicia, such as barcodes. An exemplary indicia-reading module is configured to facilitate narrow-edge integration into a thin-profile smart device.

The exemplary indicia-reading module includes a sensor module, an illuminator-aimer circuit subassembly, a processing circuit subassembly, and an interface circuit subassembly. The sensor module includes an adjustable imaging lens for imaging the indicia-reading module's field of view onto a sensor circuit, which includes a plurality of pixels. The illuminator-aimer circuit subassembly is configured both to project electromagnetic radiation toward indicia within the indicia-reading module's field of view and to project a sighting pattern that corresponds with the indicia-reading module's field of view. The processing circuit subassembly is configured to render (*e*.*g*., decode) indicia information. The interface circuit subassembly is configured to connect the indicia-reading module to a host device (*e*.*g*., a computer or smart device).

The sensor module captures the image of indicia. The module is constructed around a sensor integrated circuit die (*i.e.,* sensor IC circuit) that is chip-on-board (COB) packaged to a substrate and wire-bonded to external circuitry and connectors, with care taken to ensure that there is no wire crossover. A filter and an adjustable lens are held in close proximity above the sensor integrated circuit by a housing, which is attached to the substrate. The adjustable imaging lens focuses the indicia-reading module's field of view onto a plurality of pixels that typically include the active area of the sensor IC circuit while a filter removes unwanted electromagnetic radiation. The housing, the filter, and the substrate are joined in such a way as to hermetically seal the sensor integrated circuit from the outside environment.

The illuminator-aimer circuit subassembly has two functions, namely to illuminate the field of view and to help the user aim the module's field of view onto the indicia. The illuminator-aimer module uses two subcircuits to achieve these functions. Each subcircuit uses a light source (*e*.*g*., light emitting diode, LED) that projects light through an aperture and a corresponding lens towards a target. The illuminator subcircuit projects a uniform light pattern to highlight the module's field of view and thereby enhance the sensor performance, while the aimer subcircuit projects a sighting pattern that corresponds with the center of the module's field of view and helps the user position the indicia properly for the sensor. This sighting pattern can be a cross hair pattern or simply a dot to indicate the center of the field of view. In addition, the aimer subcircuit can project a highly visible line(s) or framing pattern(s) corresponding to the edges and/or corners of the exact field of view.

The processing circuit subassembly renders the signals from all the sensor circuit's pixels into a composite image (*e*.*g*., text image or bitmap), and can then process and/or store the image for barcode decoding. After decoding, the barcode information is passed to the interface circuit subassembly, which helps provide communication with the host device (*e.g*., a computer).

The sensor module is built on a thermally stable substrate and each circuit subassembly is built onto its own unique circuit board, each composed of thin, rigid-flex board material. The substrate and boards are electrically interconnected with flex cabling and all held into a small volume with a frame. The circuit boards snap into fittings molded into the frame and therefore do not require extra hardware. The frame, which is typically constructed of clear polycarbonate, has lenses molded into its sides so that when the illuminator-aimer circuit subassembly is in position the frame serves as both the illuminator lens and the aimer lens. The small volume of the indicia-reading module allows it to be integrated into the edge of a thin profile device.

In a related aspect, the present invention embraces a smart phone employing the exemplary indicia-reading module. In particular, the smart phone includes a computer, a display, and the indicia-reading module, which is physically integrated (*e*.*g*., narrow-edge integrated) within a slim hand-supportable housing. The smart phone typically possesses a substantially rectangular cuboid shape whose thickness is substantially smaller than both its height and its width (*e*.*g*., no more than 20 percent of either the length or the width). The indicia-reading module may be integrated to the smart phone with mounting pins and screws to prevent the deformation of the module and keep all components in place under shock and vibration.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 depicts an exemplary handheld smart device.
Figure 2 depicts a block diagram of an exemplary indicia-reader module.
Figures 3A and 3B depict exploded views of an exemplary sensor module.
Figure 4 depicts an exploded view of an exemplary indicia-reading module.
Figure 5 depicts a first exemplary embodiment of the indicia-reader module with a decoded output.
Figure 6 depicts a second exemplary embodiment of the indicia-reader module with a non-decoded output.
Figure 7 depicts an exemplary smart device and exemplary integrated indicia reader showing the scale of the reader relative to the smart device.

### DETAILED DESCRIPTION

The present invention embraces an indicia reader integrated into the smallest side (*i.e.,* the narrowest edge) of a hand held smart device (*e*.*g*., smart-phone or digital assistant). These devices are ultra-lightweight, pocket-sized devices that are easy to carry and operate with a single hand, which necessarily limits the size of the device.

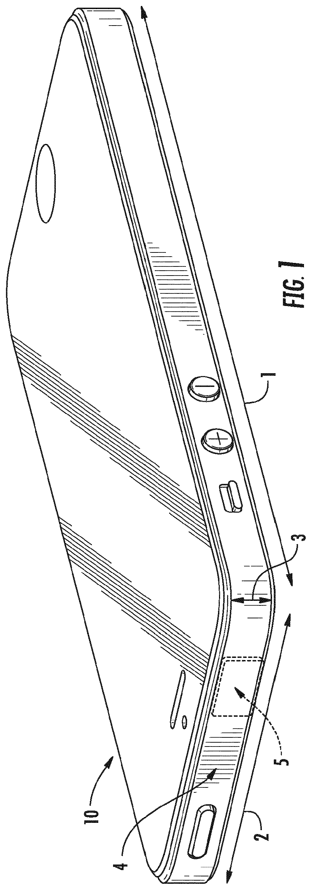

Smart phones 10, such as shown in Figure 1, tend to be rectangular cuboids whose thickness is substantially smaller than both its height and its width. For example a smart phone device (neglecting tapers) can have a length dimension 1, a width dimension 2, and a thickness dimension 3 of roughly 115 millimeters x 59 millimeters x 9 millimeters. These dimensions may vary, but some general rules apply. The length and width determine the display size and are usually driven by user interface requirements. The thickness 3 plays an important role in the ease of handling. Thinner devices are easier to hold and manipulate. Thinner devices, however, make the integration of application specific modules, either internally or externally, most challenging.

Figure 1 depicts an exemplary embodiment of a scanner that is integrated into a smart phone device. The window 5 of the integrated scanner module, shown in the "narrow edge" 4 of the device, allows for easy one-hand scanning. To achieve such an embodiment requires the integration of space-saving techniques that, when combined, produce an ultra-small integration package.

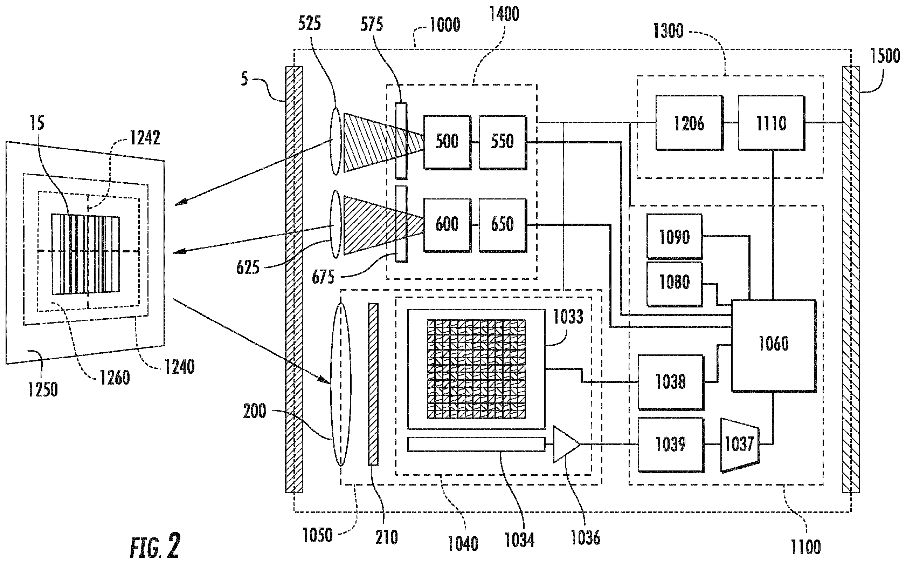

Figure 2 shows a general block diagram of the indicia-reader module 1000. The indicia-reader module typically includes a sensor module 1050 including an adjustable imaging lens 200 for imaging the indicia-reader module's field of view 1240 onto a sensor integrated circuit (IC) diced from a wafer of like sensor circuits (*i.e*., sensor IC die) 1040. The sensor IC die 1040 contains an image capture area (*i.e.,* active area) 1033 that includes a plurality of pixels arranged in rows and columns and sensitive to the light reflected from the target 1250. The sensor IC die 1040 may implement CCD or CMOS technology configured in one of many ways to convert the photonic energy into an electric signal. In one embodiment, an image is focused onto the active area 1033 of the sensor IC die 1040. The active area 1033 is exposed to the imaged light via a physical or electronic shutter. If electronic, the specific kind of shutter (*i.e*., rolling or global) depends on the image sensor implementation in regards to type (*i.e*., CMOS or CCD) and readout architecture (*i.e*., full-frame or interline). During the exposure a charge is created in each pixel; the charge depends on the image intensity in that small region. After the exposure is complete, the charges from the pixels are shifted row by row into a shift register 1034 where they then shift out one-by-one and are amplified via an amplifier 1036 that may be built into the sensor IC die 1040. The exposure, readout, timing, and other operational settings are controlled by the image sensor timing and control circuit 1038. The amplified analog signal is rendered suitable for digital conversion by a processing circuit 1039 and then converted into a digital signal via an analog-to-digital (A/D) converter 1037. The digital image is reconstructed and reformatted from the digitized pixel information by the central processing unit (*i.e*., CPU) 1060. Different sensor IC die will have different levels of integration. While the basic flow described here remains the same, some block diagram components may be integrated within the sensor IC die in different embodiments.

The image active area 1033 may respond to a variety of optical wavelengths. In cases where color information is desired the active area may be placed under a Bayer filter or other color composite filter and then post-processed to render a color image. In most cases it is also important to include a filter 210 (*e*.*g*., infrared (IR) blocking filter) to keep stray light from overloading the active area electronics or changing the perceived color information. In other embodiments, this filter may not be necessary or may be one tuned for different wavelengths (*e*.*g*., tri-band-pass filter). In addition, the active area is typically fabricated from silicon but can be made from different materials in order to achieve sensitivity to different optical wavelengths such as infra-red (IR).

The packaging of electronics and optics can affect the integration of devices into small volumes. One method pursued here to reduce the package volume for the sensor module 1050 repackages a sensor IC die 1040 into a custom package so that, in effect, the lens 200 and IR blocking filter 210 become incorporated in the sensor IC package. To accomplish this, the sensor IC die is packaged using a method call chip-on-board (COB). Chip-on-Board, or COB, packaging refers to the semiconductor assembly technology in which the sensor IC die 1040 is directly mounted on and electrically interconnected to its final circuit board instead of undergoing traditional assembly or packaging as an individual IC. The elimination of conventional device packaging from COB assemblies shrinks the final product, as well as improves its performance as a result of the shorter interconnection paths. In addition to these advantages, the COB packaging eliminates the redundant sensor cover glass, thereby reducing light loss, optical aberrations, and related image defects.

Aside from circuit boards used for COBs, various substrates are available for use in this approach. There are, for instance, ceramic and glass ceramic substrates which exhibit excellent thermal properties that are especially important in imaging applications. Organic substrates that weigh and cost less while providing a low dielectric constant also exist. There are also flex substrates that are very thin. These kinds of assemblies have received a number of other names aside from "COB" based on available substrates (*e*.*g*., chip-on-glass (COG), chip-on-flex (COF), etc.).

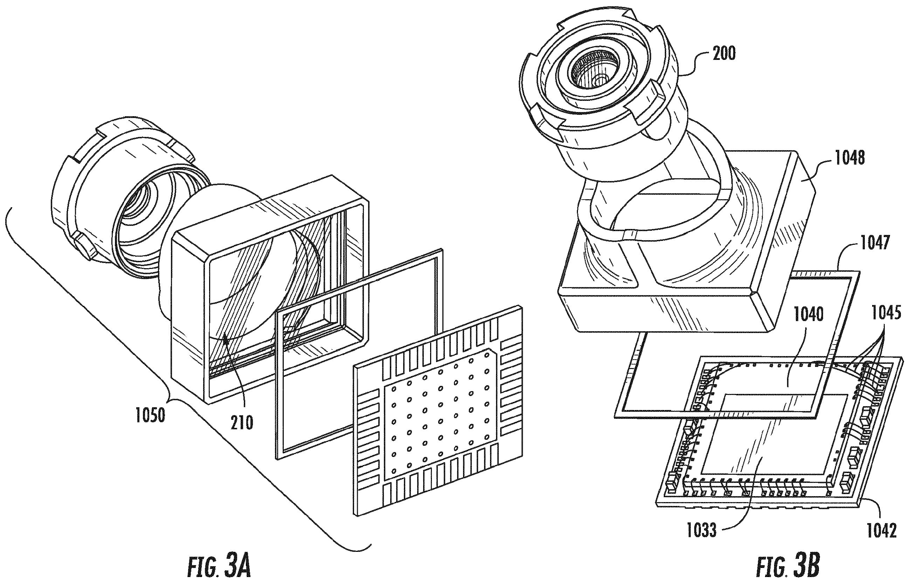

As shown in Figure 3A and Figure 3B, the sensor module 1050 is built around the sensor IC die 1040. The die 1040 is first mounted to a substrate 1042 using adhesive. The adhesive application may be in the form of dispensing, stencil printing, or pin transfer. The die placement must be accurate enough to ensure proper orientation and good planarity of the die. After the die is set, a curing process (such as exposure to heat or ultraviolet light) allows the adhesive to attain its final mechanical, thermal, and electrical properties. Any organic contaminants resulting from the curing must be removed either by plasma or solvent cleaning so as not to affect the subsequent wire bonding process.

Wire bonding is used to make the electrical connection between the substrate 1042 and the connectors and electronics of the sensor IC die 1040. The bond wires 1045 may be aluminum, copper, or gold and typically have diameters ranging from 15 microns to 100 microns. The wires are attached at both ends using some combination of heat, pressure, and ultrasonic energy to make a weld. No crossover of the bond wires assures that there are no short circuits.

The wire-bonded die and substrate are glued with an adhesive gasket 1047 to a housing 1048 that holds the adjustable imaging lens 200 and the IR blocking filter 210. After the adhesive is set, the housing 1048 and substrate 1042 form a hermetic seal, thereby protecting the sensor IC die 1040 and the bond wires 1045.

As noted, the level of sensor module integration varies. For example in a non-decoded output module the image data is delivered directly to the host device for decoding. Because of this, the on-board requirements for processing, power management, and memory are relaxed. Here, the interface may include output image data presented in parallel (8-bit) or serial (SCI2), sync signals, and control signals. The embodiment of the indicia-reader module, as shown in Figure 2, is known as a decoded output module, because it has the processing and electronics necessary to return a decoded response rather than a raw image. As shown in Figure 2, a processing circuit subassembly 1100 includes the input and output circuitry for the sensor module 1038, 1039, as well as a central processing unit 1060 and RAM memory 1080 and flash memory 1090 for program and configuration data storage. Here, the central processing unit 1060 performs image processing and decoding. The interface can be either serial (*e*.*g*., RS232) or on a bus (*e*.*g*., USB) 1500.

In the decoded output configuration, the CPU 1060 decodes the indicia recorded in an image. The indicia can be decoded by processing the image data of a frame corresponding to a line of pixel positions (*e*.*g*., a row, a column, or a diagonal set of pixel positions) to determine a spatial pattern of dark and light cells and can convert each light and dark cell pattern determined into a character or character string via table lookup. Where a decodable indicia representation is a 2D bar code symbology, a decode attempt can include the steps of locating a finder pattern using a feature detection algorithm, locating matrix lines intersecting the finder pattern according to a predetermined relationship with the finder pattern, determining a pattern of dark and light cells along the matrix lines, and converting each light pattern into a character or character string via table lookup. CPU 1060, which, as noted, can be operative in performing processing for attempting to decode decodable indicia, can be incorporated in an integrated circuit disposed on circuit board such as a rigid flex in order to obtain the thinnest board for small integration. Flex/rigid flex interconnections are used to electrically connect the processor circuit subassembly to the other subassemblies and modules.

The indicia-reading module 1000 can have an interface circuit subassembly 1300 as shown in Figure 2. This circuit subassembly is built onto its own board and is connected to the bus 1500, other subassemblies, and modules via flex cabling. The interface circuit 1110 on this board serves to assist in the communication of data to and from the indicia-reader module 1000 and to transition power into the module and to the power circuit 1206 where it is conditioned and distributed within the indicia-reader module 1000.

Figure 2 shows the interface of the module as a bus 1500. The bus 1500 is considered to be any communication system that transfers data (and power) between components inside the computer or, in this case, the smart hand-held device. The bus may be used to communicate data back and forth between the indicia-reader module 1000 and the host device or peripheral. Power may also be delivered over the bus. A power conditioning circuit, a battery, DC power supply, or any other source for providing power can use the bus to deliver power to the indicia-reading module. Finally diagnostic and programming devices may use the bus to deliver programming information or receive diagnostic information from the indicia-reader module.

As depicted in Figure 2, the interface circuit subassembly 1300 also includes a power unit 1206 that protects against overloads and distributes power at the right level and at the right time to the various subassemblies and modules within the indicia-reader module. The power unit 1206 can include a charging circuit that is continually charged by a power supply and can be configured to output energy within a range of power levels to accommodate various operation characteristics. The power from this unit can be provided as constant current or constant voltage and is adjustable so that it can serve the constant power needs of the module as well as intermittent service to subsystems for such operations as illumination, exposure, focusing, and aiming.

The illuminator-aimer circuit subassembly 1400 is used to help the user align the indicia 15 within the module's field of view 1240 and to provide light for the sensor module to record with good fidelity. This circuit subassembly is built onto its own board and is connected to other subassemblies and modules via flex cabling.

As shown in Figure 2, the illuminator-aimer circuit subassembly 1400 has two subsystems that perform similar actions. In general, it can be said that both are projection systems and as such can use a variety of optical technologies and methods (*e.g*., lenses, lightpipes, or diffractive optics) to achieve the objective of illuminating the scene and providing an aiming image. The illuminator driver circuit 550 and the aimer driver circuit 650 provide power (*e*.*g*., a constant current) to the illuminator light source 500 and aimer light source 600, respectively. The illuminator light source 500 and the aimer light source 600 may include an LED or bank of LEDs. Alternatively the aimer light source can be a laser diode to provide highly visible pattern in extra long range and under direct sun light. The illumination light source should provide light of sufficient intensity to allow for the sensor module 1050 to capture an image of low-noise and high dynamic range image with no saturation. The light should be uniform across the field of view for best results and at a wavelength that the sensor IC die 1040 was designed for (*e*.*g*., visible wavelength regime). Upon triggering the illuminator, driver circuit 550 causes the illuminator light source 500 to emit light. The light passes through a rectangular illuminator aperture 575. The image of this illuminator aperture 575 is formed on the target 1250 via the illuminator lens 525. Thus, in this embodiment, a rectangular image 1260 of uniform white light would appear on the target 1250.

To help alignment the user may also be provided with a sighting pattern 1242. This pattern is formed like the illumination pattern 1260. The light from the aimer light source 600 passes through an aimer aperture 675 (*e*.*g*., crosshair, line, or rectangle) and then is imaged via the aimer lens 625 to form a sighting pattern 1242 on the target 1250. When the user aligns the crosshairs with the center of the indicia, the indicia will image onto the center of the sensor ICs active area 1033. In one embodiment, the CPU 1060 can provide control inputs to all control circuits (*e*.*g*., the image sensor timing and control circuit 1038, the illuminator driver circuit 550, and the aimer driver circuit 650) and to the power unit 1206 to coordinate timing between image sensor array controls and illumination subsystem controls.

The imaging lens assembly 200 can be adapted for focusing an image of a decodable barcode 15, which is located within the field of view 1240, onto image sensor array 1033. Working distances should not vary so greatly that they cannot be accommodated by the depth of field and the size of the sensor. In this embodiment the imaging lens has relatively a high f-number (*i.e.,* f/#) and thus a long depth of field to accommodate all normal usage scenarios, thereby precluding the need for active focusing. Active focusing could be used but would typically add complexity, size, and cost.

As depicted in Figure 1, the window 5 of the indicia-reader module is integrated into a narrow edge of the smart device 4. This serves to seal the smart device and the sensor module to protect it from dust and debris. It also can perform some optical filtering, too, in order to reduce the unwanted stray light that otherwise would enter the device (*e*.*g*., possibly affecting performance).

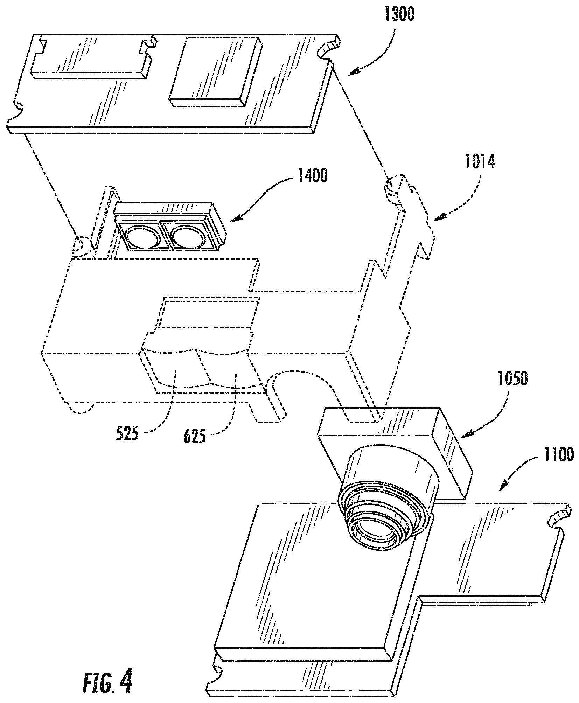

In summary, the indicia-reader module typically includes a (*i*) a sensor module 1050, (*ii*) an illuminator-aimer circuit subassembly 1400, (*iii*) a processing circuit subassembly 1100, and (*iv*) an interface circuit subassembly 1300. Each of these four modules (or subassemblies) is typically constructed on its own discrete circuit board or substrate and a variety of kinds may be used. Cabling can be used to interconnect the boards and, in this embodiment, flex or rigid-flex interconnections are used. Figure 4 shows an exploded view of the indicia-reader module 1000 with the major modules and circuit subassemblies.

To fabricate the sensor module, the sensor IC die 1040 is first COB packaged with a substrate 1042, and then integrated with the module housing 1048 and the IR-cutoff filter 210 to form a hermetically sealed assembly. *See* Figures 3A and 3B. A dummy lens is then added to the housing 1048 to allow direct soldering or reflowing with surface mount technology (SMT) of any components on this substrate. After soldering, the real lens is inserted, focused, and secured into place. As depicted in Figure 4, the sensor module 1050 and all the circuit subassemblies 1100, 1300, 1400 are attached (*e*.*g*., snap fit) to the frame 1014. The frame 1014 holds all the circuit boards and modules in place through the use of snap-fittings, which ensures cost and space efficiency. It is within the scope of the invention to employ other, less efficient techniques to attach the boards to the frame. The frame in this embodiment also functions as the lenses 525, 625 for the illuminator-aimer. The frame is typically made from a clear polycarbonate and molded or machined/polished in order to focus the projected illumination and aiming images. Here again, other methods could be used but not as efficiently (*i.e.,* with respect to size and cost). The power and data interconnection between the boards use flex or rigid-flex cables and board connectors. The frame, along with screws and pins, help to secure the module within the smart device 10 in a way that reduces deformation and mitigates shock and vibration effects.

Various components like the imaging lens 200, the sensor IC die 1040, the CPU 1060, the memory 1080, and the interface communication 1110 can be selected to achieve the present invention. For example, different focal-length lenses may be designed to image different fields of view. In another example, the sensor IC die 1040 may be selected to have a different size for capturing different fields of view, and the pixel size and density may be selected to allow for higher resolution imaging. It should be noted that some of these components may be omitted altogether depending on the level of integration with the host smart device 10. In some embodiments, the indicia-reading module 1000 may return decoded information to the host device. In that case the indicia-reading module needs memory and a strong processor. In other embodiments, however, the indicia-reading module may return non-decoded images and rely on the host device to process the images and return the decoded results. In this case neither a dedicated CPU 1060 nor any memory 1080 are needed. A simple micro controller can be included to provide timing and control to the image sensor IC die 1040 and the illuminator-aimer circuit subassembly 1400.

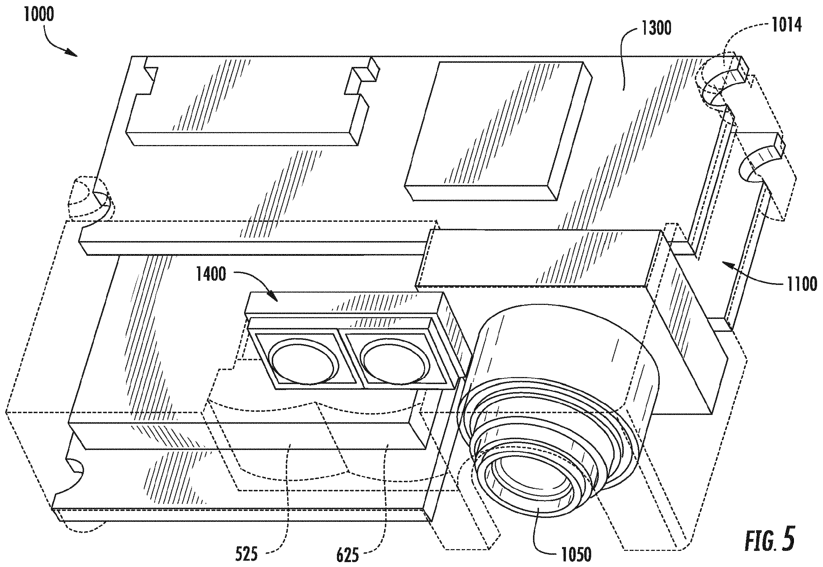

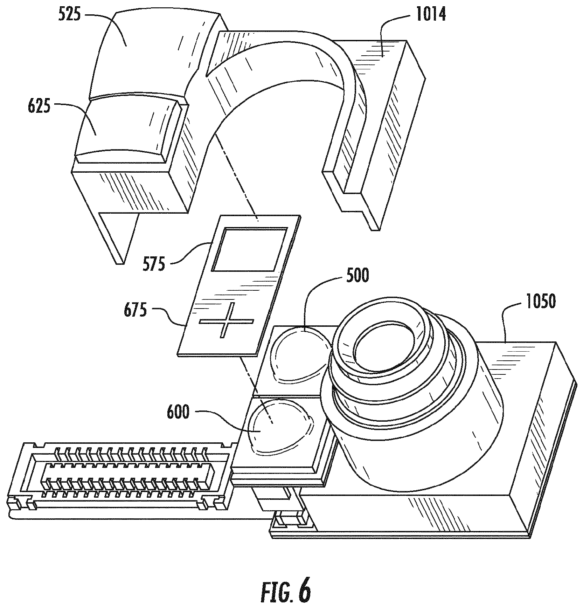

Figure 5 shows assembled indicia-reader module 1000 with a decoded output, and Figure 6 shows an exploded view of an indicia-reader module 1000 with a non-decoded output. Both indicia-reading modules 1000 have thickness dimensions of less than about 10 millimeters (e.g., 7 millimeters or less) and can readily integrate into the narrow edge of a smart device that has a thickness dimension of less than about 10 millimeters (*e*.*g*., 9 millimeters). Both embodiments utilize the COB packaging of the sensor IC die and integrating the package with the housing 1048, IR cutoff filter 210, and the substrate 1042. The embodiments depicted in Figures 5 and 6 also share a similar approach in the subassembly circuits residing on their own boards, with each board being made from a thin rigid-flex material and interconnect with flex cables. These exemplary embodiments share the principal of saving cost and space by using a polycarbonate frame 1014 to hold the boards and to serve both as support and as the optics for the illuminator-aimer circuit subassembly. Finally, both will be integrated into their host device with mounting screws and pins to secure the indicia-reading module and prevent deformation and keep all components in place under shock and vibration.

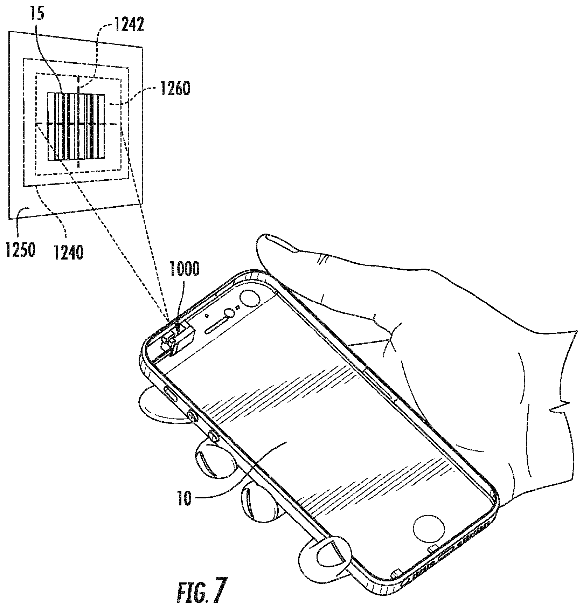

Figure 7 illustrates the relative size of the indicia-reader module with respect to the smart device 10. As depicted in Figure 7, the indicia-reading module 1000 can be oriented by a user with respect to a target (*e*.*g*., a package label) bearing decodable indicia 15 so that an illumination pattern 1260 is projected onto decodable indicia 15. In the exemplary embodiment depicted in Figure 7, a code symbol 15 is provided by a 1D bar code symbol, although a code symbol may also be provided by a 2D bar code symbol or optical character recognition (OCR) characters. The user aligns the aimer pattern 1242 and a takes a frame of image data. The frame that can be captured and subject to decoding can be a full frame (including pixel values corresponding to each pixel of image sensor array active area 1033, a partial frame in which a maximum number of pixels read out from image sensor array 1033 during operation of the indicia-reading module 1000), or a windowed frame that includes pixel values corresponding to less than a full frame of pixels of image sensor array 1033. A picture size of a windowed frame can vary depending on the number of pixels subject to addressing and readout for capture of a windowed frame.

An indicia-reading module 1000 can capture frames of image data at a rate known as a frame rate. A typical frame rate is 60 frames per second (FPS), which translates to a frame time (frame period) of 16.6 milliseconds. Another typical frame rate is 30 frames per second (FPS) which translates to a frame time (frame period) of 33.3 milliseconds per frame. A frame rate of the indicia-reading module 1000 can be increased (and frame time decreased) by decreasing of a frame picture size. After a good image of the indicia is obtained, it is processed, decoded, and sent to the host device the data is conditioned communication by the interface electronics 1110.

## Claims

1. An indicia-reader module (1000), comprising:
an illuminator-aimer circuit subassembly (1400) for projecting an illumination pattern (1260) and a sighting pattern (1242), wherein the illuminator-aimer circuit subassembly (1400) is positioned on a first rigid-flex circuit board; and
a frame (1014) configured to receive a sensor module, a processing circuit subassembly (1100), and an interface circuit subassembly, wherein the frame is configured to receive the illuminator-circuit subassembly via an attachment to the frame (1014), and
wherein the frame (1014) is constructed with lenses molded into its sides, and wherein the frame (1014) is further configured as an illuminator lens (525) for the illumination pattern (1260) and as an aimer lens (625) for the sighting pattern (1242).

2. The indicia-reader module according to claim 1, wherein the illuminator-aimer circuit subassembly (1400) comprises an illuminator light source (500) and an illuminator aperture (575) for projecting the illumination pattern (1260) via the frame (1014) serving as the illuminator lens (525) toward indicia (15) within a field of view (1240) of the imaging module (1000).

3. The indicia-reader module (1000) according to claim 1 or 2, wherein the illuminator-aimer circuit subassembly (1400) comprises an aimer light source (600) and an aimer aperture for projecting the sighting pattern (1242) via the frame serving as the aimer lens, the sighting pattern (1242) corresponding with a field of view (1240) of the imaging module (1000).

4. The indicia-reader module (1000) according to any of claims 1 to 3, further comprising a sensor module (1050) for imaging field of view (1240) of the imaging module (1000), wherein the sensor module (1050) comprises a sensor integrated-circuit die (1040) which is chip-on-board packaged.

5. The indicia-reader module (1000) according to claim 4, wherein the sensor module (1050) is positioned on a second rigid-flex circuit board, wherein the second rigid-flex circuit board is attached to the frame (1014) via a snap-fit attachment.

6. The indicia-reader module (1000) according to claim 4 or 5, wherein the sensor integrated-circuit die (1040) is attached to a substrate (1042), and the sensor integrated-circuit die (1040) is hermetically sealed within a structure formed by the substrate (1042), a housing (1048), and a filter (210).

7. The indicia-reader module (1000) according to any of claims 1 to 6, further comprising an interface circuit subassembly (1300) for connecting the imaging module (1000) to a host device (10), wherein the interface circuit subassembly (1300) is positioned on a third rigid-flex circuit board, the third rigid-flex circuit board positioned within the region and attached to the frame (1014).

8. The indicia-reader module (1000) according to claim 7, wherein the interface circuit subassembly (1300) is configured for receiving programming information and sending out diagnostic information.

9. The indicia-reader module (1000) according to any of claims 1 to 8, further comprising the processing circuit subassembly (1100) for rendering indicia information, wherein the processing circuit subassembly (1100) is positioned on a fourth rigid-flex circuit board, the fourth rigid-flex circuit board is attached to the frame (1014) via a snap-fit attachment.

10. A device comprising the indicia-reader module (1000) according to any of claims 1 to 9.

11. The device according to claim 10, wherein the device is a smart device (4) and the indicia-reader module (1000) is integrated into a narrow edge of the smart device (4).

12. The device according to claim 11, wherein the integration of the indicia-reader module (1000) into the narrow edge of the smart device (4) seals the smart device and the sensor module.

## Patentansprüche

1. Kennzeichenlesemodul (1000), umfassend:
eine Beleuchtungs-/Zielschaltungsbaugruppe (1400) zum Projizieren eines Beleuchtungsmusters (1260) und eines Zielmusters (1242), wobei die Beleuchtungs-/Zielschaltungsbaugruppe (1400) auf einer ersten Starr-Flex-Leiterplatte positioniert ist; und
einen Rahmen (1014), der ausgelegt ist zum Empfangen eines Sensormoduls, einer Verarbeitungsschaltungsbaugruppe (1100) und einer Schnittstellenschaltungsbaugruppe, wobei der Rahmen ausgelegt ist zum Empfangen der Beleuchtungsschaltungsbaugruppe über eine Befestigung an dem Rahmen (1014), und
wobei der Rahmen (1014) mit in seine Seiten eingeformten Linsen konstruiert ist, und wobei der Rahmen (1014) ferner als eine Beleuchtungslinse (525) für das Beleuchtungsmuster (1260) und als eine Ziellinse (625) für das Zielmuster (1242) ausgelegt ist.

2. Kennzeichenlesemodul nach Anspruch 1, wobei die Beleuchtungs-/Zielschaltungsbaugruppe (1400) eine Beleuchtungslichtquelle (500) und eine Beleuchtungsblende (575) zum Projizieren des Beleuchtungsmusters (1260) über den Rahmen (1014), der als die Beleuchtungslinse (525) dient, auf Kennzeichen (15) innerhalb eines Sichtfeldes (1240) des Bildgebungsmoduls (1000) umfasst.

3. Kennzeichenlesemodul (1000) nach Anspruch 1 oder 2, wobei die Beleuchtungs-/Zielschaltungsbaugruppe (1400) eine Ziellichtquelle (600) und eine Zielblende zum Projizieren des Zielmusters (1242) über den Rahmen, der als die Ziellinse dient, umfasst, wobei das Zielmuster (1242) einem Sichtfeld (1240) des Bildgebungsmoduls (1000) entspricht.

4. Kennzeichenlesemodul (1000) nach einem der Ansprüche 1 bis 3, ferner umfassend ein Sensormodul (1050) zum Bildgeben des Sichtfeldes (1240) des Bildgebungsmoduls (1000), wobei das Sensormodul (1050) einen Sensorschaltkreischip (1040) umfasst, der Chip-on-Board-gehäust ist.

5. Kennzeichenlesemodul (1000) nach Anspruch 4, wobei das Sensormodul (1050) auf einer zweiten Starr-Flex-Leiterplatte positioniert ist, wobei die zweite Starr-Flex-Leiterplatte an dem Rahmen (1014) über eine Schnappbefestigung befestigt ist.

6. Kennzeichenlesemodul (1000) nach Anspruch 4 oder 5, wobei der Sensorschaltkreischip (1040) an einem Substrat (1042) befestigt ist und der Sensorschaltkreischip (1040) innerhalb einer Struktur, die durch das Substrat (1042), ein Gehäuse (1048) und einen Filter (210) gebildet ist, hermetisch abgedichtet ist.

7. Kennzeichenlesemodul (1000) nach einem der Ansprüche 1 bis 6, ferner umfassend eine Schnittstellenschaltungsbaugruppe (1300) zum Verbinden des Bildgebungsmoduls (1000) mit einer Hostvorrichtung (10), wobei die Schnittstellenschaltungsbaugruppe (1300) auf einer dritten Starr-Flex-Leiterplatte positioniert ist, wobei die dritte Starr-Flex-Leiterplatte innerhalb des Bereichs positioniert und an dem Rahmen (1014) befestigt ist.

8. Kennzeichenlesemodul (1000) nach Anspruch 7, wobei die Schnittstellenschaltungsbaugruppe (1300) zum Empfangen von Programmierinformationen und zum Aussenden von Diagnoseinformationen ausgelegt ist.

9. Kennzeichenlesemodul (1000) nach einem der Ansprüche 1 bis 8, ferner umfassend die Verarbeitungsschaltungsbaugruppe (1100) zum Rendern von Kennzeicheninformationen, wobei die Verarbeitungsschaltungsbaugruppe (1100) auf einer vierten Starr-Flex-Leiterplatte positioniert ist, wobei die vierte Starr-Flex-Leiterplatte an dem Rahmen (1014) über eine Schnappbefestigung befestigt ist.

10. Vorrichtung, umfassend das Kennzeichenlesemodul (1000) nach einem der Ansprüche 1 bis 9.

11. Vorrichtung nach Anspruch 10, wobei die Vorrichtung eine Smartvorrichtung (4) ist und das Kennzeichenlesemodul (1000) in eine Schmalseite der Smartvorrichtung (4) integriert ist.

12. Vorrichtung nach Anspruch 11, wobei die Integration des Kennzeichenlesemoduls (1000) in die Schmalseite der Smartvorrichtung (4) die Smartvorrichtung und das Sensormodul abdichtet.

## Revendications

1. Module lecteur d'indices (1000), comprenant :
un sous-ensemble de circuit d'éclairage-pointage (1400) destiné à projeter un motif d'éclairage (1260) et un motif de visée (1242), dans lequel le sous-ensemble de circuit d'éclairage-pointage (1400) est positionné sur une première carte de circuit imprimé rigide-flexible ; et
un cadre (1014) configuré pour recevoir un module de capteur, un sous-ensemble de circuit de traitement (1100) et un sous-ensemble de circuit d'interface, dans lequel le cadre est configuré pour recevoir le sous-ensemble de circuit d'éclairage via une fixation au cadre (1014), et
dans lequel le cadre (1014) est construit avec des lentilles moulées sur ses côtés, et dans lequel le cadre (1014) est en outre configuré comme une lentille d'éclairage (525) pour le motif d'éclairage (1260) et comme une lentille de pointage (625) pour le motif de visée (1242).

2. Module lecteur d'indices selon la revendication 1, dans lequel le sous-ensemble de circuit d'éclairage-pointage (1400) comprend une source de lumière d'éclairage (500) et une ouverture d'éclairage (575) destinées à projeter le motif d'éclairage (1260) via le cadre (1014) servant de lentille d'éclairage (525) vers les indices (15) à l'intérieur d'un champ de vision (1240) du module d'imagerie (1000).

3. Module lecteur d'indices (1000) selon la revendication 1 ou 2, dans lequel le sous-ensemble de circuit d'éclairage-pointage (1400) comprend une source de lumière de pointage (600) et une ouverture de pointage destinées à projeter le motif de visée (1242) via le cadre servant de lentille de pointage, le motif de visée (1242) correspondant à un champ de vision (1240) du module d'imagerie (1000).

4. Module lecteur d'indices (1000) selon l'une quelconque des revendications 1 à 3, comprenant en outre un module de capteur (1050) destiné à imager le champ de vision (1240) du module d'imagerie (1000), dans lequel le module de capteur (1050) comprend une matrice de circuit intégré de capteur (1040) qui est montée puce sur carte.

5. Module lecteur d'indices (1000) selon la revendication 4, dans lequel le module de capteur (1050) est positionné sur une deuxième carte de circuit imprimé rigide-flexible, dans lequel la deuxième carte de circuit imprimé rigide-flexible est fixée au cadre (1014) via une fixation par encliquetage.

6. Module lecteur d'indices (1000) selon la revendication 4 ou 5, dans lequel la matrice de circuit intégré de capteur (1040) est fixée à un substrat (1042), et la matrice de circuit intégré de capteur (1040) est scellée hermétiquement à l'intérieur d'une structure formée par le substrat (1042), un boîtier (1048) et un filtre (210).

7. Module lecteur d'indices (1000) selon l'une quelconque des revendications 1 à 6, comprenant en outre un sous-ensemble de circuit d'interface (1300) destiné à connecter le module d'imagerie (1000) à un dispositif hôte (10), dans lequel le sous-ensemble de circuit d'interface (1300) est positionné sur une troisième carte de circuit imprimé rigide-flexible, la troisième carte de circuit imprimé rigide-flexible étant positionnée à l'intérieur de la région et fixée au cadre (1014).

8. Module lecteur d'indices (1000) selon la revendication 7, dans lequel le sous-ensemble de circuit d'interface (1300) est configuré pour recevoir des informations de programmation et envoyer des informations de diagnostic.

9. Module lecteur d'indices (1000) selon l'une quelconque des revendications 1 à 8, comprenant en outre le sous-ensemble de circuit de traitement (1100) destiné à restituer des informations d'indices, dans lequel le sous-ensemble de circuit de traitement (1100) est positionné sur une quatrième carte de circuit imprimé rigide-flexible, la quatrième carte de circuit imprimé rigide-flexible est fixée au cadre (1014) via une fixation par encliquetage.

10. Dispositif comprenant le module lecteur d'indices (1000) selon l'une quelconque des revendications 1 à 9.

11. Dispositif selon la revendication 10, dans lequel le dispositif est un dispositif intelligent (4) et le module lecteur d'indices (1000) est intégré dans un bord étroit du dispositif intelligent (4).

12. Dispositif selon la revendication 11, dans lequel l'intégration du module lecteur d'indices (1000) dans le bord étroit du dispositif intelligent (4) scelle le dispositif intelligent et le module de capteur.
